# EUROPEAN PATENT APPLICATION

(11) **EP 4 637 218 A1**
(43) Date of publication of application: **22.10.2025**
(21) Application number: 22968274.5
(22) Date of filing: 16.12.2022
(51) Int. Cl.: H04W 52/02

(54) **MONITORING OR CONTROL METHOD, MONITORING OR CONTROL APPARATUS, AND DEVICE AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/139747
(87) International publication number: WO 2024/124570

(57) **Abstract**

The present disclosure is applied to the technical field of radio communications. Provided are a monitoring or control method, a monitoring or control apparatus, and a device and a readable storage medium. The monitoring method comprises: sending a physical uplink shared channel (PUSCH) in a first time domain segment, wherein the first time domain segment is a time domain segment where physical downlink control channel (PDCCH) monitoring is skipped; and monitoring a low-power-consumption wake-up signal in a second time domain segment, wherein a start time domain location of the second time domain segment is a first time domain location, and the first time domain location is a time domain end location of the PUSCH, or the first time domain location is located behind the time domain end location of the PUSCH.

## Description

### TECHNICAL FIELD

The present disclosure relates to the technical field of wireless communication, and in particular, to a monitoring or control method, apparatus, device, and a readable storage medium.

### BACKGROUND

In order to save power consumption of the user equipment, the network device may indicate one power saving signal through downlink control information (DCI). The power saving signal is used to instruct the user equipment to skip monitoring of the physical downlink control channel (PDCCH) for a period of time (or called blind detection), which can be referred to as the power saving signal used to indicate to skip PDCCH monitoring (PDCCH monitoring skipping, or, PDCCH skipping). That is, when there is no data transmission, or when the network device expects a certain time interval between two consecutive scheduling PDCCHs, the power saving signal based on DCI can instruct the user equipment to skip PDCCH monitoring for a period of time, thereby saving power consumption of the user equipment.

The network device can skip PDCCH monitoring and schedule the physical downlink shared channel (PDSCH) or physical uplink shared channel (PUSCH) through the same DCI indication.

It is necessary to consider the adverse impact on the user equipment sending PUSCH when the network device indicates PDCCH monitoring and scheduling PUSCH through the same DCI.

### SUMMARY

The present disclosure provides a monitoring method, apparatus, device and readable storage medium.

In a first aspect, the present disclosure provides a monitoring method, which is performed by a user equipment, and the method includes:
sending a physical uplink shared channel (PUSCH) in a first time domain segment, where the first time domain segment is a time domain segment of physical downlink control channel (PDCCH) monitoring skipping; and
monitoring a low power wake up signal in a second time domain segment, where a starting time domain position of the second time domain segment is a first time domain position, and the first time domain position is a time domain end position of the PUSCH, or the first time domain position is after the time domain end position of the PUSCH.

In some possible implementations, the method further includes: receiving first downlink control information (DCI), where the first DCI includes indication information for indicating PDCCH monitoring skipping.

In some possible implementations, the method further includes: after receiving the low power wake up signal in the second time domain segment, monitoring the PDCCH.

In some possible implementations, the method further includes: after receiving the low power wake up signal in the second time domain segment, terminating the PDCCH monitoring skipping.

In some possible implementations, the method further includes: after receiving the low power wake up signal in the second time domain segment, monitoring the PDCCH and receiving second DCI in a third time domain segment, the second DCI includes scheduling information for scheduling retransmission of the PUSCH, a starting time domain position of the third time domain segment is a time domain end position of the low power wake up signal, or, after the time domain end position of the low power wake up signal, and a duration of the third time domain segment is a first duration.

In some possible implementations, the method further includes: receiving a first high-layer signaling from a network device, where the first high-layer signaling is used to indicate the first duration.

In some possible implementations, the method further includes: receiving a second high-layer signaling from a network device, the second high-layer signaling is used to indicate a second duration; and a duration of the second time domain segment is the second duration.

In some possible implementations, the method further includes: receiving a second high-layer signaling from a network device, the second high-layer signaling is used to indicate a second duration; a duration of the second time domain segment is a minimum value between the second duration and a third duration, the third duration is a duration from the first time domain position to a second time domain position, and the second time domain position is an end position of the first time domain segment.

In some possible implementations, the PUSCH is a dynamically scheduled PUSCH, or the PUSCH is a PUSCH configured grant.

In some possible implementations, the method further includes:
in a case where no low power wake up signal is received in the second time domain segment, skipping PDCCH monitoring between an end position of the second time domain segment and an end position of the first time domain segment.

In a second aspect, a control method is provided, which is performed by a network device and includes:
sending first downlink control information (DCI) to a user equipment, where the first DCI includes indication information for indicating PDCCH monitoring skipping;
in a case where a PUSCH sent by the user equipment is not successfully received on an uplink resource of a physical uplink shared channel (PUSCH) in a first time domain segment, sending a low power wake up signal to the user equipment in a second time domain segment, where the first time domain segment is a time domain segment of physical downlink control channel (PDCCH) monitoring skipping, a starting time domain position of the second time domain segment is a first time domain position, the first time domain position is a time domain end position of the PUSCH, or the first time domain position is after the time domain end position of the PUSCH.

In some possible implementations, the method further includes: sending second downlink control information (DCI) in a third time domain segment, where the second DCI includes scheduling information for scheduling retransmission of the PUSCH, and a starting time domain position of the third time domain segment is a time domain end position of the low power wake up signal, or, after the time domain end position of the low power wake up signal, and a duration of the third time domain segment is a first duration.

In some possible implementations, the method further includes: sending a first high-layer signaling to the user equipment, where the first high-layer signaling is used to indicate the first duration.

In some possible implementations, the method further includes: sending a second high-layer signaling to the user equipment, where the second high-layer signaling is used to indicate a second duration; and a duration of the second time domain segment is the second duration.

In some possible implementations, the method further includes: sending a second high-layer signaling to the user equipment, where the second high-layer signaling is used to indicate a second duration; a duration of the second time domain segment is a minimum value between the second duration and a third duration, the third duration is a duration from the first time domain position to the second time domain position, and the second time domain position is an end position of the first time domain segment.

In a third aspect, a monitoring apparatus is provided, which is configured in a user equipment, and the apparatus includes:
a transceiver module, configured to send a physical uplink shared channel (PUSCH) in a first time domain segment, where the first time domain segment is a time domain segment of a physical downlink control channel (PDCCH) monitoring skipping; and further configured to monitor a low power wake up signal in a second time domain segment, where a starting time domain position of the second time domain segment is a first time domain position, and the first time domain position is a time domain end position of the PUSCH, or the first time domain position is after the time domain end position of the PUSCH.

In a fourth aspect, a control apparatus is provided, which is configured in a network device, and the apparatus includes:
a transceiver module, configured to send first downlink control information (DCI) to a user equipment, where the first DCI includes indication information for indicating PDCCH monitoring skipping; and further configured to send a low power wake up signal to the user equipment in a second time domain segment in a case where a physical uplink shared channel (PUSCH) sent by the user equipment is not successfully received in a first time domain segment, where the first time domain segment is a time domain segment of physical downlink control channel (PDCCH) monitoring skipping, a starting time domain position of the second time domain segment is a first time domain position, the first time domain position is a time domain end position of the PUSCH, or the first time domain position is after the time domain end position of the PUSCH.

In a fifth aspect, an electronic device is provided, including a processor and a memory, where:
the memory is configured to store computer programs;
the processor is configured to execute the computer programs to implement the first aspect or any possible design of the first aspect.

In a sixth aspect, an electronic device is provided, including a processor and a memory, where:
the memory is configured to store computer programs;
the processor is configured to execute the computer programs to implement the second aspect or any possible design of the second aspect.

In a seventh aspect, a computer-readable storage medium is provided, where instructions are stored in the computer-readable storage medium. When the instructions are called and executed on a computer, the computer executes the above-mentioned first aspect or any possible design of the first aspect.

In an eighth aspect, a computer-readable storage medium is provided, where instructions are stored in the computer-readable storage medium. When the instructions are called and executed on a computer, the computer executes the above-mentioned second aspect or any possible design of the second aspect.

In the present disclosure, the characteristic that the UE can achieve state switching through LP-WUS is utilized. After the UE sends PUSCH during the effective period of PDCCH monitoring skipping, when the PUSCH is not successfully transmitted, the network device promptly sends LP-WUS to the UE so that the UE terminates PDCCH monitoring skipping in advance and monitors the scheduling information for scheduling retransmission of PUSCH, thereby ensuring the energy-saving effect of PDCCH monitoring skipping on the UE while ensuring the normal transmission of data of PUSCH.

### BRIEF DESCRIPTION OF THE DRAWINGS

The drawings described herein are used to provide a further understanding of the embodiments of the present disclosure and constitute a part of this application. The illustrative embodiments of the embodiments of the present disclosure and their descriptions are used to explain the embodiments of the present disclosure and do not constitute an improper limitation on the embodiments of the present disclosure. In the drawings:

The accompanying drawings herein are incorporated in and constitute a part of the specification, illustrate embodiments consistent with the embodiments of the present disclosure, and together with the specification, serve to explain the principles of the embodiments of the present disclosure.
FIG. 1 is a schematic diagram of a wireless communication system architecture provided by an embodiment of the present disclosure;
FIG. 2 is an interactive schematic diagram of a monitoring method provided by an embodiment of the present disclosure;
FIG. 3 is a schematic diagram of a time domain segment provided by an embodiment of the present disclosure;
FIG. 4 is an interactive schematic diagram of another monitoring method provided by an embodiment of the present disclosure;
FIG. 5 is a schematic diagram of another time domain segment provided by an embodiment of the present disclosure;
FIG. 6 is an interactive schematic diagram of another monitoring method provided by an embodiment of the present disclosure;
FIG. 7 is an interactive schematic diagram of a monitoring method performed by a user equipment according to an embodiment of the present disclosure;
FIG. 8 is an interactive schematic diagram of another monitoring method performed by a user equipment according to an embodiment of the present disclosure;
FIG. 9 is an interactive schematic diagram of another monitoring method performed by a user equipment according to an embodiment of the present disclosure;
FIG. 10 is an interactive schematic diagram of another monitoring method performed by a user equipment according to an embodiment of the present disclosure;
FIG. 11 is an interactive schematic diagram of a monitoring method performed by a network device according to an embodiment of the present disclosure;
FIG. 12 is an interactive schematic diagram of another monitoring method performed by a network device according to an embodiment of the present disclosure;
FIG. 13 is a structural diagram of a monitoring apparatus provided in an embodiment of the present disclosure;
FIG. 14 is a structural diagram of a monitoring device provided in an embodiment of the present disclosure;
FIG. 15 is a structural diagram of a control apparatus provided in an embodiment of the present disclosure;
FIG. 16 is a structural diagram of a control device provided in an embodiment of the present disclosure.

### DETAILED DESCRIPTION

The embodiments of the present disclosure are now further described in conjunction with the accompanying drawings and specific implementations.

Exemplary embodiments will be described in detail herein, examples of which are shown in the accompanying drawings. When the following description refers to the drawings, unless otherwise indicated, the same numbers in different drawings represent the same or similar elements. The implementations described in the following exemplary embodiments do not represent all implementations consistent with the embodiments of the present disclosure. Instead, they are merely examples of apparatuses and methods consistent with some aspects of the present disclosure as detailed in the appended claims.

The terms used in the embodiments of the present disclosure are only for the purpose of describing specific embodiments and are not intended to limit the embodiments of the present disclosure. The singular forms of "a/an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first indication information may also be referred to as the second indication information, and similarly, the second indication information may also be referred to as the first indication information. Depending on the context, the words "if" and "in case" as used herein may be interpreted as "at" or "when" or "in response to determination".

The embodiments of the present disclosure are described in detail below, and examples of the embodiments are shown in the accompanying drawings, where the same or similar reference numerals throughout represent the same or similar elements. The embodiments described below with reference to the accompanying drawings are exemplary and are intended to be used to explain the present disclosure, and cannot be understood as limiting the present disclosure.

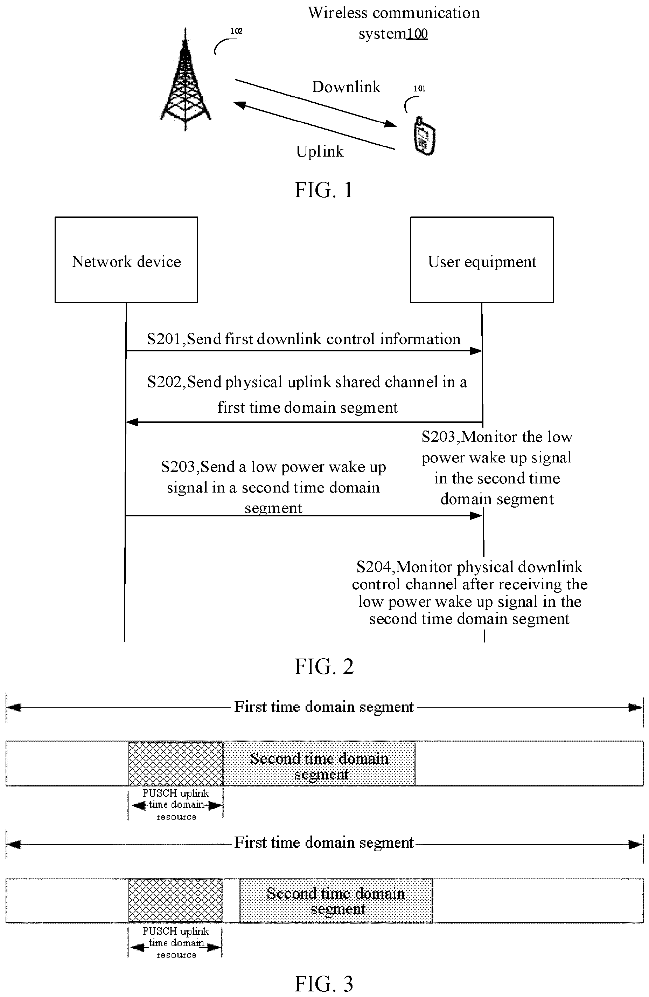

As shown in FIG. 1, the method provided in the embodiments of the present disclosure may be applied to a wireless communication system 100, which may include a user equipment 101 and a network device 102, and the number of the devices included is not limited.

It should be understood that the above wireless communication system 100 can be applied to both low-frequency scenarios and high-frequency scenarios. The application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system, or a future evolved public land mobile network (PLMN) system.

The user equipment 101 shown above may be a terminal, an access user equipment, a user equipment unit, a user equipment station, a mobile station (MS), a remote station, a remote user equipment, a mobile user equipment (mobile terminal), a wireless communication device, a user equipment agent, etc. The user equipment 101 may have a wireless transceiver function, and it may communicate with one or more network devices of one or more communication systems (such as wireless communication) and receive network services provided by the network device, and the network device here includes but is not limited to the illustrated network device 102.

The user equipment 101 may be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a user equipment in a future 5G network, or a user equipment in a future evolved PLMN network, etc.

For example, the network device 102 may be an access network device (or access network point). The access network device refers to a device that provides a network access function, such as a radio access network (RAN) base station, etc. Specifically, it may include a base station (BS), or a base station and a wireless resource management device for controlling the base station, etc., and may also include a relay station (relay device), an access point, and a base station in a future 5G network, a base station in a future evolved PLMN network, or an NR base station, etc., which may be a wearable device or a vehicle-mounted device. The network device 102 may also be a communication chip with a communication module.

When the UE receives DCI sent by the network device, and the DCI indicates PDCCH monitoring skipping, the UE does not monitor the PDCCH during the effective period of PDCCH monitoring skipping. Since the PDCCH carries the downlink control information (DCI), not monitoring the PDCCH is also equivalent to not monitoring the DCI, where the effective period of PDCCH monitoring skipping can also be referred to as a time domain segment of PDCCH monitoring skipping, which can also be referred to as the first time domain segment in the present disclosure.

In some possible implementations, after the UE fails to send PUSCH, the network device may send DCI for scheduling the retransmission of PUSCH. If the UE first receives the first DCI, the first DCI not only indicates PDCCH monitoring skipping but also indicates the scheduling information of PUSCH, the UE may send PUSCH in the first time domain segment. If the network device fails to successfully receive this PUSCH due to a transmission problem, it may send second DCI for scheduling the retransmission of uplink data corresponding to the PUSCH. The second DCI only indicates the scheduling information of PUSCH. If the time domain position corresponding to the second DCI is in the first time domain segment, since the UE does not monitor PDCCH in the first time domain segment, it will not be able to receive the second DCI, and thus cannot obtain the scheduling information of retransmission of PUSCH, and then cannot retransmit the uplink data of PUSCH, affecting the uplink data transmission of the UE.

The first solution may be considered as follows: after the UE sends PUSCH in the first time domain segment, if the network device fails to successfully receive this PUSCH due to a transmission problem, the network device may send second DCI to schedule PUSCH, and the PUSCH is used to retransmit the uplink data that was not correctly transmitted before. After receiving the second DCI, the UE retransmits the uplink data on the PUSCH resource indicated by the second DCI. The first solution can ensure that the UE receives the second DCI and ensures the normal transmission of PUSCH, but it may increase the transmission delay and cannot meet the Quality of Service (QoS) of the service.

The second solution may be considered as follows: after the UE sends PUSCH in the first time domain segment, if the network device fails to successfully receive the PUSCH due to a transmission problem, the UE terminates the PDCCH monitoring skipping in advance, i.e., resumes the UE's monitoring of the PDCCH. The second solution can ensure that the UE receives the second DCI and ensures the normal transmission of the PUSCH, but it may reduce the energy-saving effect of PDCCH monitoring skipping on the UE, and cannot effectively improve the energy-saving effect of the UE.

The third solution may be considered as follows: a low power wake up signal (LP-WUS) is used to ensure the energy-saving effect of PDCCH monitoring skipping on UE while ensuring the normal transmission of data of PUSCH. When using LP-WUS, the user equipment may include two receivers, one of which is a main receiver and the other is a low power receiver. The power consumption of the low power receiver is much smaller than that of the main receiver. In order to save the power consumption of the user equipment, the main receiver may be put into a sleep state and the low power receiver may be put into a working state. After the low power receiver receives the low power wake up signal (LP-WUS) sent by the network device, it can wake up the main receiver.

The embodiments in the present disclosure are implemented based on the third solution.

The embodiments of the present disclosure provide a monitoring method, and FIG. 2 is a flowchart of a monitoring method according to an exemplary embodiment. As shown in FIG. 2, the method includes S201 to S204.

In S201, a network device sends first DCI to a UE.

The first DCI includes indication information for indicating PDCCH monitoring skipping.

In some possible implementations, the first DCI includes indication information for indicating PDCCH monitoring skipping and scheduling information for scheduling PUSCH.

In some possible implementations, the first DCI includes indication information for indicating PDCCH monitoring skipping but does not include scheduling information for scheduling PUSCH, and scheduling DCI received before the first DCI is used to indicate scheduling information for scheduling PUSCH in the first time domain segment.

In an example, the scheduling DCI is the DCI closest to the first DCI before the first DCI.

In another example, the scheduling DCI is located before the first DCI and is separated from the first DCI by at least one DCI.

In some possible implementations, after receiving the first DCI, the UE may obtain the first time domain segment corresponding to the indication information, where the first time domain segment is a time domain segment of PDCCH monitoring skipping.

Optionally, the UE obtains a time domain starting position of the first time domain segment and a duration of the first time domain segment according to a protocol agreement or a network device configuration.

For example, a set interval is determined by a protocol agreement or a network device configuration, and the set interval is an interval between the time domain starting position of the first time domain segment and the time domain end position of the first DCI.

In an example, the set interval is 1 slot, the network device sends the first DCI in the n-th slot (slot n), and the starting position of the first time domain segment is the (n+1)-th slot (slot n+1).

In another example, the set interval is 2 slots, the network device sends the first DCI in the n-th slot (slot n), and the starting position of the first time domain segment is the (n+2)-th slot (slot n+2).

For example, a set duration is determined by the protocol agreement or the network device configuration, and the set duration is the duration of the first time domain segment.

In some possible implementations, after the UE receives the first indication information, the main receiver of the UE enters a sleep state from the time domain starting position of the first time domain segment.

In S202, the UE sends PUSCH in the first time domain segment.

In some possible implementations, the UE sends the PUSCH in a partial area in the first time domain segment.

For example: the UE sends PUSCH on an uplink resource of PUSCH in the first time domain segment.

As shown in FIG. 3, an uplink time domain resource of PUSCH is shown, on which the UE sends PUSCH.

In some possible implementations, the PUSCH is a dynamically scheduled PUSCH, or the PUSCH is a PUSCH configured grant.

In S203, the UE monitors the LP-WUS in the second time domain segment. If the network device fails to successfully receive the PUSCH sent by the UE on the uplink resource in the first time domain segment, the network device sends the LP-WUS to the UE in the second time domain segment.

In some possible implementations, the starting time domain position of the second time domain segment is the first time domain position, the first time domain position is the time domain end position of the PUSCH, or the first time domain position is after the time domain end position of the PUSCH.

In an example, a time domain interval between the first time domain position and the time domain end position of the PUSCH is agreed upon by a protocol.

In another example, the time domain interval between the first time domain position and the time domain end position of the PUSCH is configured by a network device.

In some possible implementations, the network device indicates the duration of the second time domain segment to the UE by sending a second high-layer signaling to the UE, where the second high-layer signaling is used to indicate the second duration.

In some possible implementations, the UE determines the duration of the second time domain segment in one of the following ways:
1. receiving a second high-layer signaling sent by the network device, where the second high-layer signaling is used to indicate a second duration;
   determining the duration of the second time domain segment as the second duration.
2. receiving a second high-layer signaling sent by the network device, where the second high-layer signaling is used to indicate a second duration;
   determining that the duration of the second time domain segment is the minimum value of the second duration and a third duration, the third duration is the duration from the first time domain position to a second time domain position, and the second time domain position is the end position of the first time domain segment.

In S204, the UE monitors the PDCCH after receiving the LP-WUS in the second time domain segment.

In an example, as shown in FIG. 3, the UE monitors the PDCCH in the second time domain segment.

In some possible implementations, the manner in which the UE monitors the PDCCH after receiving the LP-WUS in the second time domain segment includes one of the following:
1. the main receiver of the UE switches from the sleep state to the awake state, and monitors the PDCCH in the awake state;
2. the PDCCH monitoring skipping is terminated and PDCCH is monitored.

In the embodiments of the present disclosure, the characteristic that the UE can implement state switching through LP-WUS is utilized. After the UE sends PUSCH during the effective period of PDCCH monitoring skipping, when the PUSCH is not successfully transmitted, the network device promptly sends LP-WUS to the UE so that the UE terminates PDCCH monitoring skipping in advance, thereby providing the possibility for monitoring the scheduling information for scheduling retransmission of PUSCH, thereby ensuring the energy-saving effect of PDCCH monitoring skipping on the UE while ensuring the normal transmission of data of PUSCH.

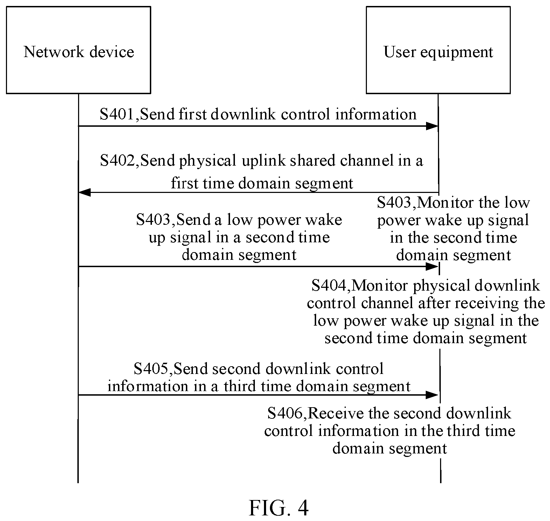

The embodiments of the present disclosure provide a monitoring method, and FIG. 4 is a flowchart of a monitoring method according to an exemplary embodiment. As shown in FIG. 4, the method includes S401 to S406.

In S401, a network device sends first DCI to a UE.

The content in S401 is the same as that in S201, and reference is made to S201, which will not be repeated here.

In S402, the UE sends a PUSCH in a first time domain segment.

The content in S402 is the same as that in S202, and reference is made to S202, which will not be repeated here.

In S403, the UE monitors an LP-WUS in the second time domain segment, and, in the case that the network device fails to successfully receive the PUSCH sent by the UE on an uplink resource in the first time domain segment, the network device sends the LP-WUS to the UE in the second time domain segment.

The content in S403 is the same as that in S203, and reference is made to S203, which will not be repeated here.

In S404, the UE receives the LP-WUS in the second time domain segment and then monitors the PDCCH.

In some possible implementations, after receiving the LP-WUS in the second time domain segment, the UE monitors the PDCCH in a third time domain segment.

In some possible implementations, the starting time domain position of the third time domain segment is the time domain ending position of the LP-WUS.

In some possible implementations, the starting time domain position of the third time domain segment is after the ending time domain position of the LP-WUS. The starting time domain position of the third time domain segment is before or after the end position of the second time domain segment.

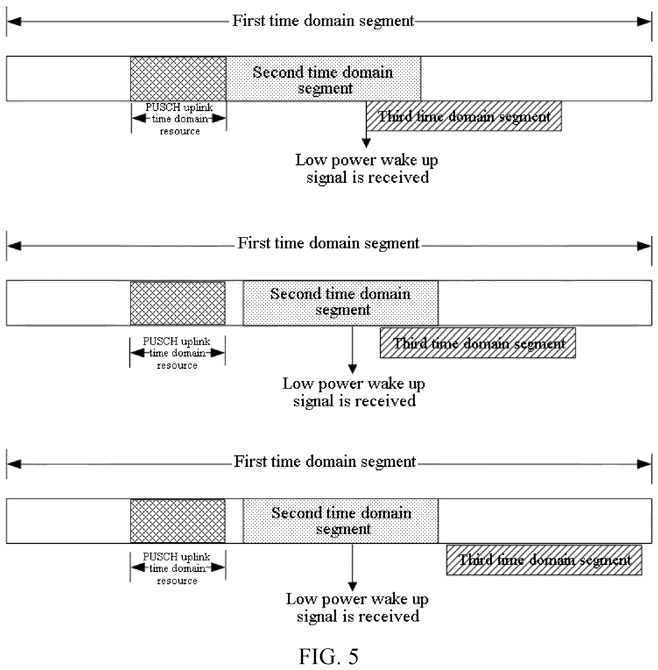

As shown in FIG. 5, the UE monitors the PDCCH in the second time domain segment. After receiving the LP-WUS in the second time domain segment, the UE monitors the PDCCH in the third time domain segment and receives the second DCI in the third time domain segment.

In some possible implementations, the duration of the third time domain segment is a first duration, and a method of determining the first duration is one of the following:
1. receiving a first high-layer signaling from the network device, where the first high-layer signaling is used to indicate the first duration;
2. determining the first duration agreed upon in an agreement.

In S405, the network device sends second DCI in a third time domain segment.

The second DCI includes scheduling information for scheduling retransmission of PUSCH.

In S406, the UE receives the second DCI in the third time domain segment.

In some possible implementations, the UE receives the second DCI on the uplink resource for PUSCH retransmission in the third time domain segment.

In the embodiments of the present disclosure, the characteristic that the UE can achieve state switching through LP-WUS is utilized. After the UE sends PUSCH during the effective period of PDCCH monitoring skipping, when the PUSCH is not successfully transmitted, the network device promptly sends LP-WUS to the UE so that the UE terminates PDCCH monitoring skipping in advance and receives scheduling information for scheduling retransmission of PUSCH, thereby ensuring the energy-saving effect of PDCCH monitoring skipping on the UE while ensuring the normal transmission of data of PUSCH.

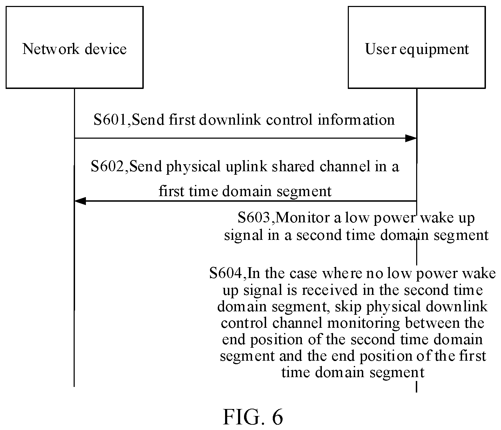

The present disclosure provides a monitoring method, and FIG. 6 is a flowchart of a monitoring method according to an exemplary embodiment. As shown in FIG. 6, the method includes S601-S604.

In S601, a network device sends first downlink control information (DCI) to a UE.

The content in S601 is the same as that in S201, and reference is made to S201, which will not be repeated here.

In S602, the UE sends a PUSCH in a first time domain segment.

The content in S602 is the same as that in S202, and reference is made to S202, which will not be repeated here.

In S603, after receiving the LP-WUS in the second time domain segment, the UE monitors the LP-WUS.

The content in S603 is the same as that in S203, and reference is made to S203, which will not be repeated here.

In S604: in the case where no LP-WUS is received in the second time domain segment, the UE skips PDCCH monitoring between the end position of the second time domain segment and the end position of the first time domain segment.

In the embodiments of the present disclosure, after the UE sends PUSCH during the effective period of PDCCH monitoring skipping, in the case where the PUSCH is successfully transmitted, the network device does not need to send LP-WUS to the UE in the second time domain segment. In the case where the UE does not receive LP-WUS in the second time domain segment, it skips monitoring PDCCH in the entire first time domain segment, thereby ensuring the energy-saving effect of PDCCH monitoring skipping on the UE when the PUSCH is successfully transmitted, and saving the energy consumption of the UE.

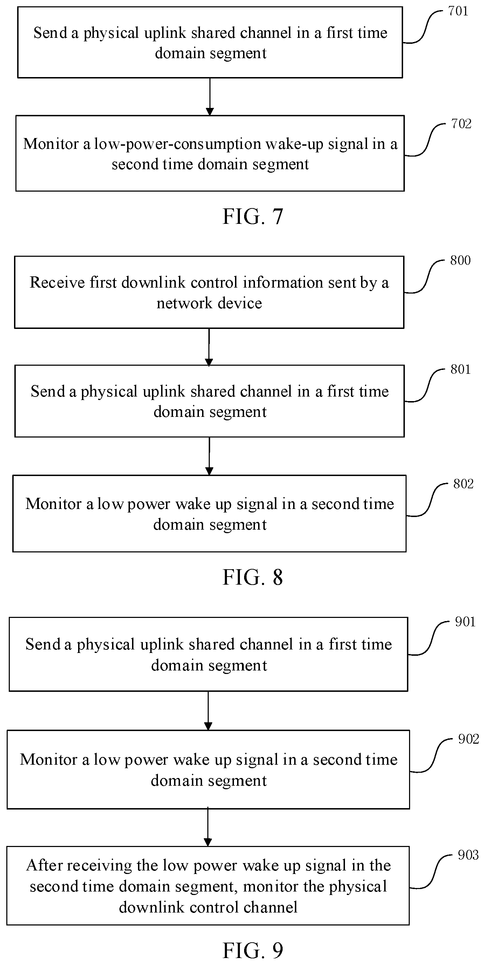

The embodiments of the present disclosure provide a monitoring method, which is performed by a UE. FIG. 7 is a flowchart of a monitoring method performed by a UE according to an exemplary embodiment. As shown in FIG. 7, the method includes S701 to S702.

In S701, PUSCH is sent in a first time domain segment.

The first time domain segment is a time domain segment of physical downlink control channel (PDCCH) monitoring skipping.

In some possible implementations, the UE sends the PUSCH in a partial area in the first time domain segment.

For example: the UE sends a PUSCH on a PUSCH uplink resource in the first time domain segment.

As shown in FIG. 3, the UE sends the PUSCH on the PUSCH uplink time domain resource.

In some possible implementations, the PUSCH is a dynamically scheduled PUSCH, or the PUSCH is a PUSCH configured grant.

In S702, LP-WUS is monitored in a second time domain segment.

The starting time domain position of the second time domain segment is the first time domain position, the first time domain position is the time domain end position of the PUSCH, or the first time domain position is after the time domain end position of the PUSCH.

In an example, as shown in FIG. 3, the UE monitors the PDCCH in the second time domain segment.

In an example, the time domain interval between the first time domain position and the time domain end position of the PUSCH is agreed upon by a protocol.

In another example, the time domain interval between the first time domain position and the time domain end position of the PUSCH is configured by a network device.

In some possible implementations, the duration of the second time domain segment is determined by one of the following methods:
1. receiving a second high-layer signaling sent by the network device, where the second high-layer signaling is used to indicate a second duration;
   determining the duration of the second time domain segment as the second duration;
2. receiving a second high-layer signaling sent by the network device, where the second high-layer signaling is used to indicate a second duration;
   determining that the duration of the second time domain segment is the minimum value of the second duration and a third duration, the third duration is the duration from the first time domain position to the second time domain position, and the second time domain position is the end position of the first time domain segment.

In the embodiments of the present disclosure, the characteristic that the UE can implement state switching through LP-WUS is utilized, and the UE monitors LP-WUS after sending PUSCH during the effective period of PDCCH monitoring skipping, so that when the PUSCH is not successfully transmitted, the UE can promptly receive the scheduling information sent by the network device for scheduling the retransmission of PUSCH, thereby achieving energy-saving while ensuring the normal transmission of data of PUSCH, and, when the PUSCH is successfully transmitted, the PDCCH monitoring can be skipped in the entire first time domain segment, and the characteristic that the low power receiver monitors LP-WUS with only a small energy consumption is utilized, thereby achieving the energy-saving effect of PDCCH monitoring skipping on the UE to a great extent.

The embodiments of the present disclosure provide a monitoring method, which is performed by a UE. FIG. 8 is a flowchart of a monitoring method performed by a UE according to an exemplary embodiment. As shown in FIG. 8, the method includes S800 to S802.

In S800, first DCI sent by a network device is received.

The first DCI includes indication information for indicating PDCCH monitoring skipping.

In some possible implementations, the first DCI includes indication information for indicating PDCCH monitoring skipping and scheduling information for scheduling PUSCH.

In some possible implementations, the first DCI includes indication information for indicating PDCCH monitoring skipping but does not include scheduling information for scheduling PUSCH, and scheduling DCI received before the first DCI is used to indicate scheduling information for scheduling PUSCH in the first time domain segment.

In an example, the scheduling DCI is DCI that is closest to the first DCI before the first DCI.

In another example, the scheduling DCI is located before the first DCI and is separated from the first DCI by at least one DCI.

In some possible implementations, after receiving the first DCI, the UE may obtain the first time domain segment corresponding to the indication information, where the first time domain segment is a time domain segment of PDCCH monitoring skipping.

Optionally, the UE obtains the time domain starting position of the first time domain segment and the duration of the first time domain segment according to a protocol agreement or a network device configuration.

For example, a set interval is determined by a protocol agreement or a network device configuration, and the set interval is the interval between the time domain starting position of the first time domain segment and the time domain end position of the first DCI.

In an example, the set interval is 1 slot, the network device sends the first DCI in the n-th slot (slot n), and the starting position of the first time domain segment is the (n+1)-th slot (slot n+1).

In another example, the set interval is 2 slots, the network device sends the first DCI in the n-th slot (slot n), and the starting position of the first time domain segment is the (n+2)-th slot (slot n+2).

For example, the set duration is determined by the protocol agreement or the network device configuration, and the set duration is the duration of the first time domain segment.

In some possible implementations, after the UE receives the first indication information, the main receiver of the UE enters a sleep state from the time domain starting position of the first time domain segment.

In some possible implementations, the PUSCH is a dynamically scheduled PUSCH, or the PUSCH is a PUSCH configured grant.

S801 is the same as S701 in the previous embodiment and will not be described in detail here.

S802 is the same as S702 in the previous embodiment and will not be described again here.

The present disclosure provides a monitoring method, which is performed by a UE. FIG. 9 is a flowchart of a monitoring method performed by a UE according to an exemplary embodiment. As shown in FIG. 9, the method includes S901 to S903:
In S901, PUSCH is sent in a first time domain segment.

The content in S901 is the same as that in S701, and reference is made to S701, which will not be repeated here.

In S902, LP-WUS is monitored in a second time domain segment.

The content in S902 is the same as that in S702, and reference is made to S702, which will not be repeated here.

In S903, after receiving the LP-WUS in the second time domain segment, the PDCCH is monitored.

In some possible implementations, at least one of the following is performed after receiving the LP-WUS in the second time domain segment:
1. The main receiver switches from the sleep state to the awake state, and monitors the PDCCH in the awake state.
2. The PDCCH monitoring skipping is terminated and PDCCH is monitored.
3. The PDCCH is monitored and the second DCI is received in the third time domain segment.

The second DCI includes scheduling information for scheduling retransmission of PUSCH, the starting time domain position of the third time domain segment is the time domain end position of LP-WUS, or the starting time domain position of the third time domain segment is after the time domain end position of LP-WUS.

As shown in FIG. 5, the UE monitors the PDCCH in the second time domain segment. After receiving the LP-WUS in the second time domain segment, the UE monitors the PDCCH in the third time domain segment and receives the second DCI in the third time domain segment.

In some possible implementations, the duration of the third time domain segment is a first duration, and a method of determining the first duration is one of the following:
1. receiving a first high-layer signaling from a network device, where the first high-layer signaling is used to indicate the first duration;
2. determining the first duration agreed upon in the agreement.

In the embodiment of the present disclosure, S800 may be further included before S901.

In the embodiments of the present disclosure, the characteristic that the UE can implement state switching through LP-WUS is utilized. The UE monitors LP-WUS after sending PUSCH during the effective period of PDCCH monitoring skipping, so that when the PUSCH is not successfully transmitted, the UE can promptly receive the scheduling information sent by the network device for scheduling the retransmission of PUSCH, thereby achieving energy saving while ensuring the normal transmission of data of PUSCH.

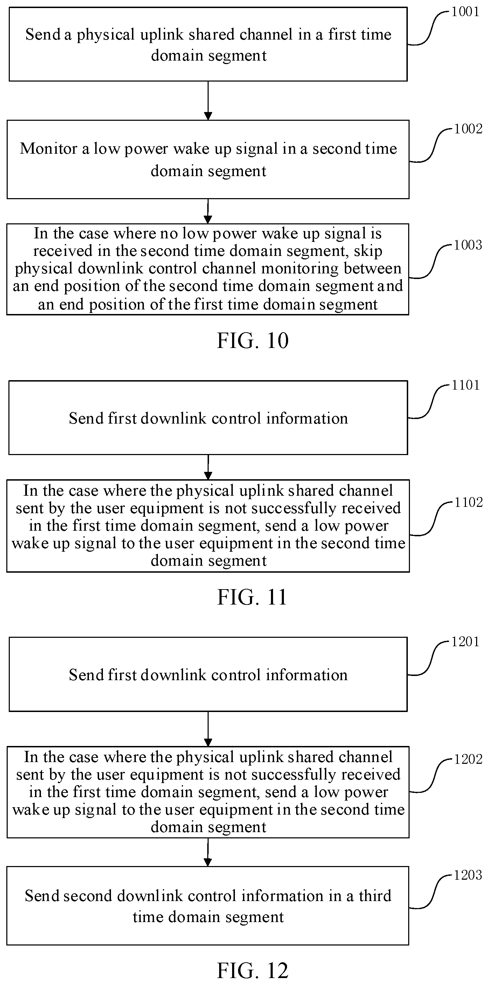

The present disclosure provides a monitoring method, which is performed by a UE. FIG. 10 is a flowchart of a monitoring method performed by a UE according to an exemplary embodiment. As shown in FIG. 10, the method includes S1001 to S1003.

In S1001, PUSCH is sent in a first time domain segment.

The content in S1001 is the same as that in S701, and reference is made to S701, which will not be repeated here.

In S1002, LP-WUS is monitored in a second time domain segment.

The content in S1002 is the same as that in S702, and reference is made to S702, which will not be repeated here.

In S1003, in the case where no LP-WUS is received in the second time domain segment, PDCCH monitoring is skipped between an end position of the second time domain segment and an end position of the first time domain segment.

In the embodiments of the present disclosure, S800 may be further included before S1001.

In the embodiments of the present disclosure, the characteristic that the UE can achieve state switching through LP-WUS is utilized. The UE monitors LP-WUS after sending PUSCH during the effective period of PDCCH monitoring skipping, so that when PUSCH is successfully transmitted, PDCCH monitoring can be skipped in the entire first time domain segment. The characteristic that monitoring LP-WUS by a low power receiver only causes a small energy consumption is utilized, and the energy-saving effect of PDCCH monitoring skipping on the UE is realized to a great extent.

The present disclosure provides a control method, which is performed by a network device. FIG. 11 is a flowchart of a control method performed by a network device according to an exemplary embodiment. As shown in FIG. 11, the method includes S1101 to S1102.

In S1101, first DCI is sent to a UE.

The first DCI includes indication information for indicating PDCCH monitoring skipping.

In some possible implementations, the first DCI includes indication information for indicating PDCCH monitoring skipping and scheduling information for scheduling PUSCH.

In some possible implementations, the first DCI includes indication information for indicating PDCCH monitoring skipping but does not include scheduling information for scheduling PUSCH, and scheduling DCI received before the first DCI is used to indicate scheduling information for scheduling PUSCH in the first time domain segment.

In an example, the scheduling DCI is DCI that is closest to the first DCI before the first DCI.

In another example, the scheduling DCI is located before the first DCI and is separated from the first DCI by at least one DCI.

In S1102, in the case where the PUSCH sent by the UE is not successfully received in the first time domain segment, an LP-WUS is sent to the UE in the second time domain segment.

The first time domain segment is a time domain segment of physical downlink control channel (PDCCH) monitoring skipping, the starting time domain position of the second time domain segment is the first time domain position, the first time domain position is the time domain end position of PUSCH, or the first time domain position is after the time domain end position of PUSCH.

In some possible implementations, the method of indicating the duration of the second time domain segment to the UE is: sending a second high-layer signaling to the UE, where the second high-layer signaling is used to indicate the second duration. The duration of the second time domain segment is the second duration, or the duration of the second time domain segment is the minimum value of the second duration and a third duration, the third duration is the duration from the first time domain position to the second time domain position, and the second time domain position is the end position of the first time domain segment.

In the embodiments of the present disclosure, the characteristic that the UE can achieve state switching through LP-WUS is utilized. After the UE sends PUSCH during the effective period of PDCCH monitoring skipping, when the PUSCH is not successfully transmitted, the network device promptly sends LP-WUS to the UE so that the UE terminates PDCCH monitoring skipping in advance and monitors the scheduling information for scheduling retransmission of PUSCH, thereby ensuring the energy-saving effect of PDCCH monitoring skipping on the UE while ensuring the normal transmission of data of PUSCH.

The present disclosure provides a control method, which is performed by a network device. FIG. 12 is a flowchart of a control method performed by a network device according to an exemplary embodiment. As shown in FIG. 12, the method includes S1201 to S1202.

In S1201, first DCI is sent to a UE.

The content in S1201 is the same as that in S1101, and reference is made to S1101, which will not be repeated here.

In S1202, in the case where a PUSCH sent by the UE is not successfully received on a PUSCH uplink resource in a first time domain segment, a LP-WUS is sent to the UE in a second time domain segment.

The content in S1202 is the same as that in S1102, and reference is made to S1102, which will not be repeated here.

In S1203, second downlink control information (DCI) is sent in a third time domain segment.

The second DCI includes scheduling information for scheduling retransmission of PUSCH, the starting time domain position of the third time domain segment is the time domain end position of the LP-WUS, or, after the time domain end position of the LP-WUS, the duration of the third time domain segment is the first duration.

In some possible implementations, the duration of the third time domain segment is a first duration, and a method of determining the first duration is one of the following:
1. receiving a first high-layer signaling from a network device, where the first high-layer signaling is used to indicate the first duration;
2. determining the first duration agreed upon in the agreement.

In the embodiments of the present disclosure, the characteristic that the UE can achieve state switching through LP-WUS is utilized. After the UE sends PUSCH during the effective period of PDCCH monitoring skipping, when the PUSCH is not successfully transmitted, the network device promptly sends LP-WUS to the UE to enable the UE to terminate PDCCH monitoring skipping in advance, and sends second DCI in the third time domain segment, so that the UE can monitor the scheduling information for scheduling retransmission of PUSCH as soon as possible, thereby ensuring the energy-saving effect of PDCCH monitoring skipping on the UE while ensuring the normal transmission of data of PUSCH.

Based on the same concept as the above method embodiments, the embodiment of the present disclosure also provides a communication apparatus, which may have the function of the UE in the above method embodiments and is used to execute the steps performed by the UE provided in the above embodiments. The function can be implemented by hardware, or by software or hardware executing corresponding software. The hardware or software includes one or more modules corresponding to the above functions.

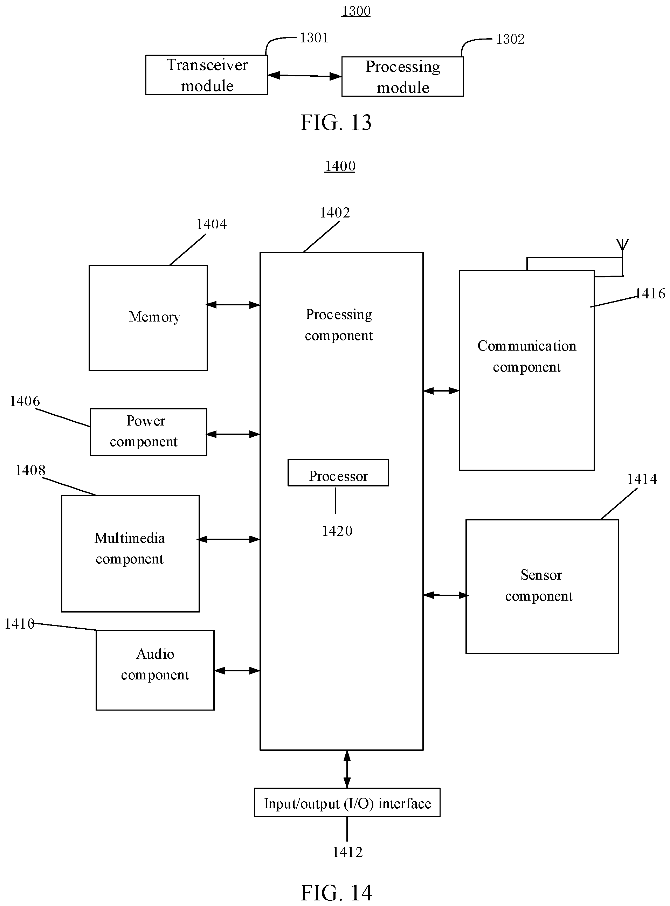

In a possible implementation, the communication apparatus 1300 shown in FIG. 13 may serve as the UE involved in the above method embodiments, and execute the steps executed by the UE in the above method embodiments.

The communication apparatus 1300 includes a transceiver module 1301 and a processing module 1302.

The transceiver module 1301 is configured to send a physical uplink shared channel (PUSCH) in a first time domain segment, and the first time domain segment is a time domain segment of physical downlink control channel (PDCCH) monitoring skipping; and the transceiver module 1301 is further configured to monitor a low power wake up signal in a second time domain segment, the starting time domain position of the second time domain segment is the first time domain position, and the first time domain position is the time domain end position of the PUSCH, or the first time domain position is after the time domain end position of the PUSCH.

In some possible implementations, the transceiver module 1301 is further configured to receive first downlink control information (DCI), where the first DCI includes indication information for indicating PDCCH monitoring skipping.

In some possible implementations, the transceiver module 1301 is further configured to monitor the PDCCH after receiving the low power wake up signal in the second time domain segment.

In some possible implementations, the processing module 1302 is further configured to terminate PDCCH monitoring skipping after receiving the low power wake up signal in the second time domain segment.

In some possible embodiments, the transceiver module 1301 is further configured to monitor PDCCH and receive second DCI in a third time domain segment after receiving the low power wake up signal in the second time domain segment, the second DCI includes scheduling information for scheduling retransmission of PUSCH, the starting time domain position of the third time domain segment is the time domain end position of the low power wake up signal, or, after the time domain end position of the low power wake up signal, and the duration of the third time domain segment is the first duration.

In some possible implementations, the transceiver module 1301 is further configured to receive a first high-layer signaling from a network device, where the first high-layer signaling is used to indicate the first duration.

In some possible implementations, the transceiver module 1301 is further configured to receive a second high-layer signaling from a network device, where the second high-layer signaling is used to indicate a second duration; and the duration of the second time domain segment is the second duration.

In some possible embodiments, the transceiver module 1301 is further configured to receive a second high-layer signaling from a network device, where the second high-layer signaling is used to indicate a second duration; the duration of the second time domain segment is the minimum value between the second duration and a third duration, the third duration is the duration from the first time domain position to the second time domain position, and the second time domain position is the end position of the first time domain segment.

In some possible implementations, the transceiver module 1301 is further configured so that the PUSCH is a dynamically scheduled PUSCH, or the PUSCH is a PUSCH configured grant.

In some possible implementations, the processing module 1302 is further configured to skip PDCCH monitoring between the end position of the second time domain segment and the end position of the first time domain segment in the case where no low power wake up signal is received in the second time domain segment.

When the communication apparatus is the user equipment 101, its structure may also be as shown in FIG. 14. FIG. 14 is a block diagram of a monitoring apparatus 1400 according to an exemplary embodiment. For example, the apparatus 1400 may be a mobile phone, a computer, a digital broadcast terminal, a messaging device, a game console, a tablet device, a medical device, a fitness device, a personal digital assistant, etc.

Referring to FIG. 14, the apparatus 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 generally controls the overall operation of the apparatus 1400, such as operations associated with display, phone calls, data communications, camera operations, and recording operations. The processing component 1402 may include one or more processors 1420 to execute instructions to perform all or part of the steps of the above-described methods. In addition, the processing component 1402 may include one or more modules to facilitate the interaction between the processing component 1402 and other components. For example, the processing component 1402 may include a multimedia module to facilitate the interaction between the multimedia component 1408 and the processing component 1402.

The memory 1404 is configured to store various types of data to support operations on the apparatus 1400. Examples of such data include instructions for any application or method operating on the apparatus 1400, contact data, phone book data, messages, pictures, videos, etc. The memory 1404 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1406 provides power to the various components of the apparatus 1400. The power component 1406 may include a power management system, one or more power supplies, and other components associated with generating, managing, and distributing power to the apparatus 1400.

The multimedia component 1408 includes a screen that provides an output interface between the apparatus 1400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, swipe, and gestures on the touch panel. The touch sensor may not only sense the boundaries of the touch or swipe action, but also detect the duration and pressure associated with the touch or swipe operation. In some embodiments, the multimedia component 1408 includes a front camera and/or a rear camera. When the apparatus 1400 is in an operating mode, such as a shooting mode or a video mode, the front camera and/or the rear camera may receive external multimedia data. Each front camera and rear camera may be a fixed optical lens system or have a focal length and optical zoom capability.

The audio component 1410 is configured to output and/or input audio signals. For example, the audio component 1410 includes a microphone (MIC), and when the apparatus 1400 is in an operating mode, such as a call mode, a recording mode, and a speech recognition mode, the microphone is configured to receive an external audio signal. The received audio signal can be further stored in the memory 1404 or sent via the communication component 1416. In some embodiments, the audio component 1410 also includes a speaker for outputting audio signals.

The I/O interface 1412 provides an interface between the processing component 1402 and peripheral interface modules, such as a keyboards, a click wheel, buttons, etc. These buttons may include but are not limited to: a home button, a volume button, a start button, and a lock button.

The sensor assembly 1414 includes one or more sensors for providing various aspects of the status assessment of the apparatus 1400. For example, the sensor assembly 1414 can detect the open/closed state of the apparatus 1400, the relative positioning of components, such as the display and keypad of the apparatus 1400, the sensor assembly 1414 can also detect the position change of the apparatus 1400 or a component of the apparatus 1400, the presence or absence of user contact with the apparatus 1400, the orientation or acceleration/deceleration of the apparatus 1400, and the temperature change of the apparatus 1400. The sensor assembly 1414 can include a proximity sensor configured to detect the presence of a nearby object without any physical contact. The sensor assembly 1414 can also include an optical sensor, such as a CMOS or CCD image sensor, for use in imaging applications. In some embodiments, the sensor assembly 1414 can also include an accelerometer, a gyroscope sensor, a magnetic sensor, a pressure sensor, or a temperature sensor.

The communication component 1416 is configured to facilitate wired or wireless communication between the apparatus 1400 and other devices. The apparatus 1400 can access a wireless network based on a communication standard, such as WiFi, 4G or 5G, or a combination thereof. In an exemplary embodiment, the communication component 1416 receives a broadcast signal or broadcast-related information from an external broadcast management system via a broadcast channel. In an exemplary embodiment, the communication component 1416 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 1400 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above methods.

In an exemplary embodiment, a non-transitory computer-readable storage medium including instructions is also provided, such as a memory 1404 including instructions, and the instructions can be executed by a processor 1420 of the apparatus 1400 to perform the above methods. For example, the non-transitory computer-readable storage medium can be a ROM, a random access memory (RAM), a CD-ROM, a magnetic tape, a floppy disk, an optical data storage device, etc.

Based on the same concept as the above method embodiments, the embodiment of the present disclosure also provides a communication apparatus, which can have the function of the network device in the above method embodiments, and is used to execute the steps performed by the network device provided in the above embodiments. The function can be implemented by hardware, or by software or hardware executing corresponding software. The hardware or software includes one or more modules corresponding to the above functions.

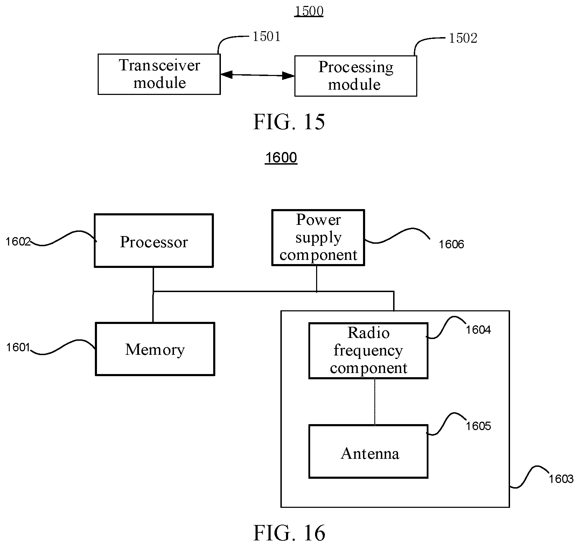

In a possible implementation, the communication apparatus 1500 shown in FIG. 15 may be used as the network device involved in the above method embodiments, and execute the steps performed by the network device in the above method embodiments.

The communication apparatus 1500 includes a transceiver module 1501 and a processing module 1502.

The transceiver module 1501 is configured to send first downlink control information (DCI) to a user equipment, where the first DCI includes indication information for indicating PDCCH monitoring skipping; and the transceiver module 1501 is further configured to send a low power wake up signal to the user equipment in a second time domain segment in the case where a PUSCH sent by the user equipment is not successfully received on a physical uplink shared channel (PUSCH) uplink resource in a first time domain segment. The first time domain segment is a time domain segment of physical downlink control channel (PDCCH) monitoring skipping, the starting time domain position of the second time domain segment is a first time domain position, the first time domain position is the time domain end position of the PUSCH, or the first time domain position is after the time domain end position of the PUSCH.

In some possible embodiments, the transceiver module 1501 is further configured to send second downlink control information (DCI) in a third time domain segment, the second DCI includes scheduling information for scheduling retransmission of PUSCH, the starting time domain position of the third time domain segment is the time domain end position of the low power wake up signal, or, after the time domain end position of the low power wake up signal, and the duration of the third time domain segment is the first duration.

In some possible implementations, the transceiver module 1501 is further configured to send a first higher-layer signaling to the user equipment, where the first higher-layer signaling is used to indicate the first duration.

In some possible implementations, the transceiver module 1501 is further configured to send a second high-layer signaling to the user equipment, where the second high-layer signaling is used to indicate a second duration; and the duration of the second time domain segment is the second duration.

In some possible embodiments, the transceiver module 1501 is further configured to send a second high-layer signaling to the user equipment, where the second high-layer signaling is used to indicate a second duration; the duration of the second time domain segment is the minimum value between the second duration and the third duration, the third duration is the duration from the first time domain position to the second time domain position, and the second time domain position is the end position of the first time domain segment.

When the communication apparatus is a network device, its structure can also be shown in FIG. 16. The network device 101 is taken as a base station as an example to illustrate the structure of the communication apparatus. As shown in FIG. 16, the apparatus 1600 includes a memory 1601, a processor 1602, a transceiver component 1603, and a power supply component 1606. The memory 1601 is coupled to the processor 1602, and can be used to store the programs and data necessary for the communication apparatus 1600 to implement various functions. The processor 1602 is configured to support the communication apparatus 1600 to perform the corresponding functions in the above methods, and this function can be implemented by calling the programs stored in the memory 1601. The transceiver component 1603 may be a wireless transceiver, which can be used to support the communication apparatus 1600 to receive signaling and/or data through a wireless air interface, and send signaling and/or data. The transceiver component 1603 may also be referred to as a transceiver unit or a communication unit. The transceiver component 1603 may include a radio frequency component 1604 and one or more antennas 1605, where the radio frequency component 1604 may be a remote radio unit (RRU), which may be specifically used for transmission of radio frequency signals and conversion of radio frequency signals into baseband signals, and the one or more antennas 1605 may be specifically used for radiation and reception of radio frequency signals.

When the communication apparatus 1600 needs to send data, the processor 1602 can perform baseband processing on the data to be sent, and then output the baseband signal to the RF unit. The RF unit performs RF processing on the baseband signal and then sends the RF signal in the form of electromagnetic waves through the antenna. When data is sent to the communication apparatus 1600, the RF unit receives the RF signal through the antenna, converts the RF signal into a baseband signal, and outputs the baseband signal to the processor 1602. The processor 1602 converts the baseband signal into data and processes the data.

Those skilled in the art will readily appreciate other implementations of the embodiments of the present disclosure after considering the specification and practicing the contents disclosed herein. This application is intended to cover any variations, uses, or adaptations of the embodiments of the present disclosure, which follow the general principles of the embodiments of the present disclosure and include common knowledge or customary technical means in the art that are not disclosed in the present disclosure. The specification and embodiments are to be considered merely exemplary, and the true scope and spirit of the embodiments of the present disclosure are indicated by the appending claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

By utilizing the characteristic that UE can implement state switching through LP-WUS, after UE sends PUSCH during the effective period of PDCCH monitoring skipping, when PUSCH is not successfully transmitted, the network device promptly sends LP-WUS to the UE so that the UE terminates PDCCH monitoring skipping in advance and monitors the scheduling information for scheduling retransmission of PUSCH, thereby ensuring the energy-saving effect of PDCCH monitoring skipping on UE while ensuring the normal transmission of data of PUSCH.

## Claims

1. A monitoring method, performed by a user equipment, comprising:
sending a physical uplink shared channel (PUSCH) in a first time domain segment, wherein the first time domain segment is a time domain segment of physical downlink control channel (PDCCH) monitoring skipping; and
monitoring a low power wake up signal in a second time domain segment, wherein a starting time domain position of the second time domain segment is a first time domain position, and the first time domain position is a time domain end position of the PUSCH, or the first time domain position is after the time domain end position of the PUSCH.

2. The method according to claim 1, wherein the method further comprises:
receiving first downlink control information (DCI), wherein the first DCI comprises indication information for indicating PDCCH monitoring skipping.

3. The method according to claim 1 or 2, wherein the method further comprises: after receiving the low power wake up signal in the second time domain segment, monitoring the PDCCH.

4. The method according to any one of claims 1 to 3, wherein the method further comprises: after receiving the low power wake up signal in the second time domain segment, terminating the PDCCH monitoring skipping.

5. The method according to any one of claims 1 to 2, wherein the method further comprises: after receiving the low power wake up signal in the second time domain segment, monitoring the PDCCH and receiving second DCI in a third time domain segment, the second DCI comprises scheduling information for scheduling retransmission of the PUSCH, a starting time domain position of the third time domain segment is a time domain end position of the low power wake up signal, or, after the time domain end position of the low power wake up signal, and a duration of the third time domain segment is a first duration.

6. The method according to claim 5, wherein the method further comprises: receiving a first high-layer signaling from a network device, wherein the first high-layer signaling is used to indicate the first duration.

7. The method according to any one of claims 1 to 6, wherein the method further comprises: receiving a second high-layer signaling from a network device, the second high-layer signaling is used to indicate a second duration; and a duration of the second time domain segment is the second duration.

8. The method according to any one of claims 1 to 6, wherein the method further comprises: receiving a second high-layer signaling from a network device, wherein the second high-layer signaling is used to indicate a second duration;
a duration of the second time domain segment is a minimum value between the second duration and a third duration, the third duration is a duration from the first time domain position to a second time domain position, and the second time domain position is an end position of the first time domain segment.

9. The method according to any one of claims 1 to 8, wherein the PUSCH is a dynamically scheduled PUSCH, or the PUSCH is a PUSCH configured grant.

10. The method according to any one of claims 1 to 9, wherein the method further comprises:
in a case where no low power wake up signal is received in the second time domain segment, skipping PDCCH monitoring between an end position of the second time domain segment and an end position of the first time domain segment.

11. A control method, performed by a network device, comprising: sending first downlink control information (DCI) to a user equipment, wherein the first DCI comprises indication information for indicating PDCCH monitoring skipping; in a case where a PUSCH sent by the user equipment is not successfully received on an uplink resource of a physical uplink shared channel (PUSCH) in a first time domain segment, sending a low power wake up signal to the user equipment in a second time domain segment, wherein the first time domain segment is a time domain segment of physical downlink control channel (PDCCH) monitoring skipping, a starting time domain position of the second time domain segment is a first time domain position, the first time domain position is a time domain end position of the PUSCH, or the first time domain position is after the time domain end position of the PUSCH.

12. The monitoring method according to claim 11, wherein the method further comprises:
sending second downlink control information (DCI) in a third time domain segment, wherein the second DCI comprises scheduling information for scheduling retransmission of the PUSCH, and a starting time domain position of the third time domain segment is a time domain end position of the low power wake up signal, or, after the time domain end position of the low power wake up signal, and a duration of the third time domain segment is a first duration.

13. The monitoring method according to claim 12, wherein the method further comprises:
sending a first high-layer signaling to the user equipment, wherein the first high-layer signaling is used to indicate the first duration.

14. The monitoring method according to any one of claims 11 to 13, wherein the method further comprises: sending a second high-layer signaling to the user equipment, the second high-layer signaling is used to indicate a second duration; and a duration of the second time domain segment is the second duration.

15. The method according to any one of claims 11 to 13, wherein the method further comprises: sending a second high-layer signaling to the user equipment, wherein the second high-layer signaling is used to indicate a second duration;
a duration of the second time domain segment is a minimum value between the second duration and a third duration, the third duration is a duration from the first time domain position to a second time domain position, and the second time domain position is an end position of the first time domain segment.

16. A monitoring apparatus, configured in a user equipment, the apparatus comprising:
a transceiver module, configured to send a physical uplink shared channel (PUSCH) in a first time domain segment, wherein the first time domain segment is a time domain segment of a physical downlink control channel (PDCCH) monitoring skipping; and further configured to monitor a low power wake up signal in a second time domain segment, wherein a starting time domain position of the second time domain segment is a first time domain position, and the first time domain position is a time domain end position of the PUSCH, or the first time domain position is after the time domain end position of the PUSCH.

17. A control apparatus, configured in a network device, the apparatus comprising:
a transceiver module, configured to send first downlink control information (DCI) to a user equipment, wherein the first DCI comprises indication information for indicating PDCCH monitoring skipping; and further configured to send a low power wake up signal to the user equipment in a second time domain segment in a case where a physical uplink shared channel (PUSCH) sent by the user equipment is not successfully received in a first time domain segment, wherein the first time domain segment is a time domain segment of physical downlink control channel (PDCCH) monitoring skipping, a starting time domain position of the second time domain segment is a first time domain position, the first time domain position is a time domain end position of the PUSCH, or the first time domain position is after the time domain end position of the PUSCH.

18. An electronic device, comprising a processor and a memory, wherein:
the memory is configured to store computer programs;
the processor is configured to execute the computer programs to implement the method according to any one of claims 1 to 10.

19. An electronic device, comprising a processor and a memory, wherein:
the memory is configured to store computer programs;
the processor is configured to execute the computer programs to implement the method according to any one of claims 11 to 15.

20. A computer-readable storage medium storing instructions, wherein when the instructions are called and executed on a computer, the computer executes the method according to any one of claims 1 to 10.

21. A computer-readable storage medium storing instructions, wherein when the instructions are called and executed on a computer, the computer executes the method according to any one of claims 11 to 15.
